(19) Europäisches Patentamt
European Patent Office
Office européen des brevets

(11) Veröffentlichungsnummer: **0 237 722**
**B1**

(12) # EUROPÄISCHE PATENTSCHRIFT

(45) Veröffentlichungstag der Patentschrift: 09.08.89

(51) Int. Cl.⁴: **C08G 69/32**, C08G 69/42

(21) Anmeldenummer: 87100827.2

(22) Anmeldetag: 22.01.87

ERRATUM

| DIE TEXTSTELLE: TEXT PUBLISHED: LE PASSAGE SUIVANT: | (SEITE, SPALTE, ZEILE) (PAGE, COLUMN, LINE) (PAGE, COLONNE, LIGNE) | | | LAUTET BERICHTIGT: SHOULD READ: DEVRAIT ETRE LU: |
|---|---|---|---|---|
| (2). als aromatische Dicarbonsäuren<br>a) C(1-6)-Alkyl<br>b) gegebenenfalls alkyl-oder arylsubsituierter Phenylrest | 6 | | 54/56 | (2) als aromatische Dicarbonsäuren<br>a) Isophthalsäure, die gegebenenfalls bis zu 60 Molprozent durch Terephthalsäure ersetzt sein kann und wobei beide Säuren ein- oder mehrfach durch folgende Reste substituiert sein können<br>a) C(1-6)-Alkyl<br>b) gegebenenfalls alkyl-oder arylsubsituierter Phenylrest |

Tag der Entscheidung über die Berichtigung / Date of decision on rectification / Date de décision portant sur modification: 11.1.90

Ausgabe- und Veröffentlichungstag / Issue and publication date / Date d'edition et de publication: 21.3.90

Patbl.Nr / EPB no / Bull. no: 90/12

(19) Europäisches Patentamt
European Patent Office
Office européen des brevets

(11) Veröffentlichungsnummer: **0 237 722 B1**

(12) **EUROPÄISCHE PATENTSCHRIFT**

(45) Veröffentlichungstag der Patentschrift: **09.08.89**

(51) Int. Cl.[4]: **C08G 69/32**, C08G 69/42

(21) Anmeldenummer: **87100827.2**

(22) Anmeldetag: **22.01.87**

(54) **Verfahren zur Herstellung thermoplastisch verarbeitbarer aromatischer Polyamide.**

(30) Priorität: **18.03.86 DE 3609011**

(43) Veröffentlichungstag der Anmeldung: **23.09.87 Patentblatt 87/39**

(45) Bekanntmachung des Hinweises auf die Patenterteilung: **09.08.89 Patentblatt 89/32**

(84) Benannte Vertragsstaaten: **AT BE CH DE FR GB IT LI NL SE**

(56) Entgegenhaltungen:
**EP-A- 0 099 997**
**US-A- 3 658 938**
**US-A- 3 859 252**

**Die Akte enthält technische Angaben, die nach dem Eingang der Anmeldung eingereicht wurden und die nicht in dieser Patentschrift enthalten sind.**

(73) Patentinhaber: **HÜLS AKTIENGESELLSCHAFT, Patentabteilung / PB 15 - Postfach 13 20, D-4370 Marl 1(DE)**

(72) Erfinder: **Finke, Jürgen, Dr., Am Alten Sportplatz 17a, D-4370 Marl(DE)**
Erfinder: **Bartmann, Martin, Dr., Burgstrasse 36, D-4350 Recklinghausen(DE)**

**EP 0 237 722 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Aromatische Polyamide mit der wiederkehrenden Einheit

$$- CO - Ar - CO - NH - Ar' - X - Ar'' - Y - Ar'' - X - Ar' - NH - \quad (I)$$

zeichnen sich nicht nur durch hohe Temperaturbeständigkeit und gute mechanische Eigenschaften aus; sie sind auch thermoplastisch verarbeitbar (s. Elias/Vohwinkel, "Neue polymere Werkstoffe für die industrielle Anwendung", 2. Folge, Carl Hanser Verlag 1983, Seite 242 f.). Dabei stehen X und Y wechselseitig für einen Ethersauerstoff und die Sulfonylgruppe und Ar, Ar′ und Ar″ stehen unabhängig voneinander für die p- und m-Phenylengruppe.

Bekannte Verfahren zur Herstellung von aromatischen Polyamiden sind:

1. Tieftemperatur-Lösungspolykondensation durch Umsetzung von aromatischen Dicarbonsäuredichloriden mit aromatischen Diaminen in polaren Lösungsmitteln (US-PSS 32 87 324, 35 41 056, 36 00 350, 38 19 587, 37 67 756, 38 69 429, 36 73 143, 38 17 941, 30 63 966 und DE-AS 22 19 703).
Gegenstand der US-PS 3 859 252 sind thermoplastische Kondensationspolymere mit aromatischer Bisamidstruktur. Die Verbindung mit R = H,
X = $SO_2$ und Y = O enthält die Einheit I. Sie wird aus Isophthaloylchlorid und dem entsprechenden Diamin hergestellt.

2. Grenzflächenpolykondensation durch Reaktion zwischen einem aromatischen Dicarbonsäuredichlorid und einem aromatischen Diamin an der Grenzfläche einer organischen und einer wäßrigen Phase (DE-OSS 19 08 297, 23 25 139 und DE-PS 30 06 899).

Aromatische Polyamide können auch durch Reaktion von aromatischen Dicarbonsäuren mit aromatischen Diisocyanaten (DE-OS 19 28 435) und durch Umsetzung von aromatischen Dicarbonsäurediarylestern mit aromatischen Diaminen hergestellt werden.

So beschreiben Brode et al. die Darstellung von 4,4′-[Sulfonylbis(p-phenylenoxy)]dianilin (X = O, Y = $SO_2$) aus p-Aminophenol und 4,4′-Dichlordiphenylsulfon und dessen Kondensation mit aromatischen Säurechloriden wie z. B. Terephthalsäurechlorid zu aromatischen Polyamiden mit Glasübergangstemperaturen (Tg) zwischen 230 und 320 °C. (Polymer Prepr. Am. Chem. Soc. Div. Pol. Chem. 15, 761 (1974) und Adv. Chem. Ser. 1975, 142; vgl. CA 84, 5530 sf).

Dieses Verfahren hat den Nachteil, daß es auf den Einsatz von aktivierten, schwierig handhabbaren Monomeren, wie Dicarbonsäurechloriden, angewiesen ist.

Es sind auch Verfahren bekannt, bei denen man aromatische Polyamide direkt durch Reaktion von aromatischen Dicarbonsäuren und aromatischen Diaminen in Gegenwart von aromatischen Phosphiten erhält. Als Lösemittel haben sich für dieses Verfahren N-Methylsäureamide, insbesondere N-Methylpyrrolidon, bewährt. Mit anderen dipolar aprotischen Lösemitteln wie z. B. Dimethylsulfoxid werden dagegen keine polymeren Amide erhalten (vgl. F. Higashi et al, J. Polym. Sci., Polym. Chem. Ed. 18, 1711 ff. (1980)).

Aus einer Zusammenfassung (vgl. S. M. Aharoni et al, J. Polym. Sci., Polym. Chem. Ed. 22, 2579 (1984) folgt, daß

- das zum Einsatz kommende Phosphit Arylgruppen enthalten muß und vorzugsweise Triphenylphosphit ist;
- die Arylphosphite mindestens in einer solchen Menge eingesetzt werden müssen, daß auf 1 Mol umzusetzendem Amid 1 Mol einer Verbindung mit der Gruppierung

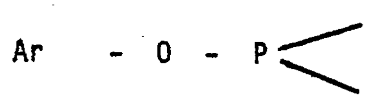

kommt, da diese Gruppierung im Laufe der Reaktion verbraucht wird und diese Reaktion die treibende Kraft der Umsetzung darstellt;
- Pyridin für die Reaktion nicht notwendig ist, aber gleichwohl einen beschleunigenden Einfluß auf den Ablauf der Reaktion hat.
- die Reaktion auch in Abwesenheit von Lösungsmittel und Base bei 280°C durchführbar ist.

In der europäischen Offenlegungsschrift O 099 997 wird schließlich ein Verfahren zur Herstellung von aromatischen Polyamiden beschrieben, bei dem aromatische Dicarbonsäuren mit aromatischen Diaminen in einem polaren Lösemittel in Gegenwart eines Dehydratisierungskatalysators wie z. B. einer P-haltigen Verbindung umgesetzt werden. Die hier offenbarten Polyamide können aufgrund ihrer hohen Erweichungspunkte, die im Bereich der Zersetzungstemperatur oder sogar darüber liegen, nicht thermoplastisch verarbeitet werden. Setzt man nach diesem Verfahren elektronenreiche aromatische Diamine wie z. B. 4,4′-Diaminodiphenylether ein, erhält man nur nach langen Reaktionszeiten hochmolekulare Produkte, die durch die Bildung nicht identifizierter Nebenprodukte stark verfärbt sind. Setzt man dagegen elektronenarme Diamine wie z. B. 4,4'-Diaminodiphenylsulfon ein, versagt das Verfahren der EP-OS 0 099 997 völlig. Es lassen sich nur stark verfärbte, oligomere Produkte herstellen.

Neben diesen Verfahren, bei denen die Kondensation in einem Lösemittel durchgeführt wird, hat es auch Versuche gegeben, Polyamide in der Schmelze herzustellen. So beschreibt die US-PS 31 09 836 ein Verfahren zur Herstellung von Polyamiden der wiederkehrenden Einheiten (CO - Ar - NH), das darin besteht, Acetamidobenzoesäure 3 Stunden im Vakuum auf 200 bis 300 °C zu erhitzen.
Dieses Verfahren liefert - im Gegensatz zu den Behauptungen in dieser Schrift - keine thermoplastisch verarbeitbaren Produkte, da die Schmelzpunkte der Reaktionsprodukte im Bereich der Zersetzungstemperatur oder darüber liegen.

Es ist auch vorgeschlagen worden, aromatische Polyamide durch Umamidierung von acylierten aromatischen Aminen in der Schmelze herzustellen. Abgesehen davon, daß eine solche Vorgehensweise die vorherige Herstellung der acylierten Amine erfordern würde, sind die mit diesem Verfahren erzielten Ergebnisse noch als recht unbefriedigend anzusehen. Um die Verarbeitbarkeit zu verbessern, wurden nicht rein aromatische Ausgangsverbindungen, sondern Gemische mit aliphatischen Vertretern eingesetzt. Die Diamine werden nicht vollständig, sondern nur teilweise acyliert. Schließlich wird der Reaktionsschmelze Essigsäure, Essigsäureanhydrid, Dimethylacetamid oder ein anderes Mittel zur Verbesserung der Fließfähigkeit zugesetzt. (vgl. Keske et al. Polymer Prepr. 25, Part XXV, S. 25 (1984) und US-PS 36 54 227)

Obwohl in dem Standardwerk von Bühler "Spezialplaste" Akademieverlag, Berlin (1978) auf Seite 412 darauf hingewiesen wird, daß die Methode der Schmelzpolykondensation auf die Darstellung aromatische Polyamide aus aromatischen Dicarbonsäuren und einfachen aromatischen Diaminen nicht anwendbar sei, war es das ehrgeizige Ziel der vorliegenden Erfindung, ein Verfahren zur Herstellung aromatischer Polyamide durch eben diese Schmelzpolykondensation bereitzustellen. Ein weiteres Ziel war es, Produkte zu erhalten, die nicht nur thermoplastische sondern auch flüssigkristalline Eigenschaften aufweisen, d. h. thermotrop sind.

Es wurde jetzt ein Verfahren gefunden, mit dem sich bestimmte aromatische Diamine mit bestimmten aromatischen Dicarbonsäuren in der Schmelze zu aromatischen Polyamiden umsetzen lassen. Erstaunlicherweise sind die erhaltenen Produkte nicht nur thermoplastisch verarbeitbar, wie dies aus dem Stand der Technik bekannt war, sondern zeigen in der Schmelze Doppelbrechung. Die Charakterisierung flüssigkristalliner Phasen durch Doppelbrechung in der Schmelze wird in der US-PS 4 118 372 beschrieben. Damit ist es gelungen, eine neue Klasse technisch interessanter aromatischer Polyamide zu erschließen.

Das Verfahren zur Herstellung der Polyamide besteht darin, daß man eine etwa äquimolare Mischung der aromatischen Dicarbonsäure und der aromatischen Diamine in Gegenwart einer mindestens katalytisch wirksamen Menge von Triphenylphosphit oder einer vom Phosphor abgeleiteten Säure der Formel $H_3PO_n$ mit $2 < n < 4$ oder einer katalytisch wirksamen Menge einer Mischung aus den genannten Phosphorverbindungen und einem 4-Dialkylaminopyridin in der Schmelze bei Temperaturen zwischen 200 und 380 °C umsetzt.

Der Zusatz der geringen Menge des Cokatalysators hat einen ganz erheblichen Effekt auf die Bildung des Polyamids.

- Der J-Wert, der ein Maß für das Molekulargewicht darstellt, wird erheblich erhöht.
- Die Farbqualität des Polymeren wird deutlich verbessert.
- Die Polykondensationszeit wird drastisch reduziert.
- Die Reaktionstemperatur wird stark erniedrigt.
- Das Molekulargewicht der erhaltenen Polyamide liegt zwischen 10 000 und 200 000, bevorzugt zwischen 20 000 bis 70 000.

Erfindungsgemäß können folgende aromatische Dicarbonsäuren oder deren Mischungen eingesetzt werden:

a) Isophathalsäure, die bis zu 60 Molprozent durch Terephthalsäure ersetzt sein kann, und wobei beide Säuren ein- oder mehrfach durch folgende Rest substituiert sein können
(a) C(1-6)-Alkyl
(b) gegebenenfalls alkyl- oder arylsubstituierter Phenylrest
(c) Alkoxyrest mit 1 - 6 C-Atomen
(d) Phenoxyreste, wobei der Phenylring wiederum alkyl- oder arylsubstituiert sein kann
(e) Halogen, insbesondere Chlor und Brom,
b) und eine Dicarbonsäure der Formel

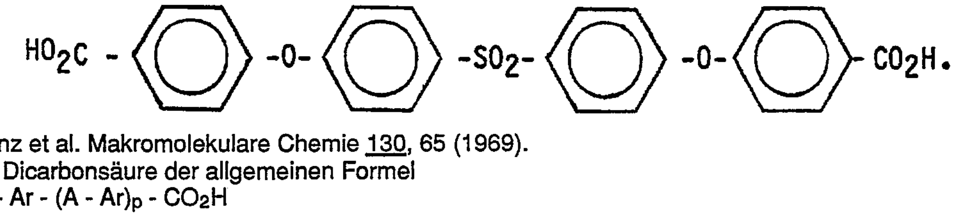

(vgl. Lorenz et al. Makromolekulare Chemie 130, 65 (1969).
c) eine Dicarbonsäure der allgemeinen Formel
$HO_2C - Ar - (A - Ar)_p - CO_2H$

mit Ar = m-Phenylen oder p-Phenylen
A = -O-, -S-, $-SO_2-$, -CO-, und
p = 0 oder 1

Erfindungsgemäß können folgende aromatische Diamine oder deren Mischungen eingesetzt werden:

$H_2N$ - Ar' - X - Ar'' - Y - Ar'' - X - Ar' - $NH_2$

Ar' und Ar'' stehen für m- oder insbesondere p-Phenylenreste; insbesondere
4,4'-Bis(4-aminophenoxy)diphenylsulfon (X = 0, Y = $SO_2$) und
4,4'-Bis(4-aminophenylensulfonyl)diphenylether (X = $SO_2$, Y = O)

Die Verbindung mit X = O und Y = $SO_2$ wird durch Umsetzung von p-Aminophenol mit 4,4'-Dichlordiphenylsulfon erhalten.

Die Herstellung der Verbindung mit X = $SO_2$ und Y = 0 wird in der US-PS 3 859 252 beschrieben.

Bis zu 70 Molprozent der soeben aufgeführten Diamine können durch folgende aromatischen Diamine ersetzt werden:

Aromatische Diamine der allgemeinen Formel

$H_2N$ - Ar $((Z)_q$ - Ar $)_r$ - $NH_2$

mit Ar = m-Phenylen, p-Phenylen
Z = gleiche oder verschiedene Reste aus der Gruppe -O-, -S-, $-SO_2-$, -CO-, $-C(CH_3)-$
q = 0 oder 1
r = 0, 1 oder 2

Bezogen auf 1 Mol aromatischer Diamine werden 0,95 bis 1,05 Mol, vorzugsweise 1,0 Mol, aromatischer Dicarbonsäure eingesetzt.

Die Umsetzung der aromatischen Dicarbonsäuren mit den Diaminen wird in Gegenwart einer katalytischen Menge einer phosphorhaltigen Verbindung oder in Gegenwart einer katalytischen Menge eines Gemisches aus dieser phosphorhaltigen Verbindung und einem 4-Dialkylaminopyridin durchgeführt.

Geeignete phosphorhaltige Verbindungen umfassen Triphenylphoshit, hypophosphorige Säure, phosphorige Säure und Phoshorsäure.

Die als Cokatalysator eingesetzten 4-Dialkylaminopyridine weisen die Struktur

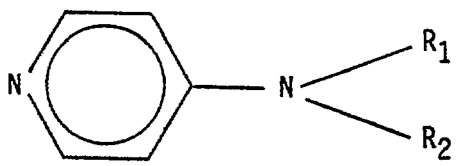

auf, wobei $R_1$ und $R_2$ entweder unabhängig voneinander für einen $C_{1-10}$-Alkylrest stehen oder zusammen mit dem Aminostickstoff einen Pyrrolidin- oder Piperidinring bilden können.

Bevorzugt sind:

4-Dimethylaminopyridin
4-Dibutylaminopyridin
4-Di-n-hexylaminopyridin
4-Piperidinylpyridin.

Die Pyridinderivate können gemäß Synthesis, (1978), 844, hergestellt werden.

Als Cokatalysator können ferner hochsiedende organische Basen mit tertiären Stickstoffatomen, wie z. B. Isochinolin oder Chinolin, sowie anorganische basische Salze, insbesondere Alkali- und Erdalkalicarbonate, wie z. B. Calciumcarbonat, eingesetzt werden.

Bezogen auf 100 Mole eingesetzter Dicarbonsäure werden jeweils 0,1 bis 10 Mol, vorzugsweise 1 - 5 Mole der phosphorhaltigen Verbindung und des Catalysators eingesetzt.

Üblicherweise arbeitet man unter Inertgas bei Normaldruck. Es kann jedoch, wenn dies aus irgendwelchen Gründen wünschenswert sein sollte, auch bei leichtem Über- oder Unterdruck gearbeitet werden. Die zur Erzielung ausreichend hochmolekularer Produkte notwendigen Reaktionzeiten liegen zwischen 1 und 4 Stunden.

Die Polykondensation wird in der Schmelze bei Temperaturen zwischen 200 und 380 °C, vorzugsweise 250 bis 350 °C, durchgeführt. Es gibt insbesondere drei Varianten, in denen das Verfahren durchgeführt werden kann:

I. Die Reaktanden und die Katalysatoren werden gemeinsam aufgeschmolzen und bei Temperaturen zwischen 200 und 250 °C vorkondensiert. Dann wird die Temperatur auf maximal 350 bis 380 °C erhöht

und das Präpolymere nachkondensiert. Der stattfindende Molekulargewichtsaufbau ist an der starken Erhöhung der Schmelzviskosität zu erkennen.

II. Eine Pulvermischung der Reaktanden und Katalysatoren wird in einem Kneter unter allmählicher Temperatursteigerung von 220 auf 290 °C solange behandelt, bis das bei der Kondensation entstehende Wasser entfernt ist. Alternativ ist es auch möglich, die Polykondensation in einem Extruder durchzuführen. Auch in diesem Fall beschickt man das Gerät mit einer Pulvermischung der Komponenten und sorgt durch geeignete Temperatureinstellung für eine vollständige Entfernung des Reaktionswassers.

III. Schließlich ist es auch möglich, entsprechend Variante I die Ausgangsprodukte zunächst zu einem Vorkondensat bei einer Temperatur von 200 bis 280 °C umzusetzen und anschließend das Vorkondensat in einem Kneter oder in einem Extruder nachzukondensieren. Im Extruder werden dann üblicherweise Temperaturen von 280 bis 350 °C, vorzugsweise 290 bis 330 °C, erforderlich sein. Diese Variante ist besonders bevorzugt.

Sollte das Endprodukt noch kein ausreichend hohes Molekulargewicht aufweisen, ist es möglich, eine Molekulargewichtserhöhung durch Festphasennachkondensation zu erzielen. Eine solche Vorgehensweise ist dem Fachmann vertraut.

Der Katalysator verbleibt üblicherweise im Produkt. Er kann jedoch, falls es wünschenswert sein sollte, durch Umfällung des Reaktionsproduktes aus einem geeigneten Lösemittel, wie z. B. N-Methylpyrrolidon, entfernt werden.

Zur Herstellung von ausreichend hochmolekularen Produkten ist es notwendig, das während der Polykonsation gebildete Wasser aus dem Reaktionssystem zu entfernen. Gemäß Variante I reicht hierzu das Über-bzw. Durchleiten von Inertgas aus. Es kann jedoch auch Vakuum angelegt werden.

Am Ende der Polykondensation erhält man eine mehr oder weniger viskose Schmelze des Polymeren, die direkt zu Granulat weiterverarbeitet kann.

Die anfallenden Produkte können durch Verpressen bei erhöhter Temperatur (> 200 °C) zu Folien verarbeitet werden. Aus den organischen Lösungen der Polyamide in geeigneten aprotischen polaren Lösemitteln können in üblicher Weise auch Gießfolien hergestellt werden.

Der J-Wert der erhaltenen Polyamide, der ein Maß für die relative Molmasse darstellt, wird in den folgenden Versuchen in Gemischen aus 1,2-Dichlorbenzol und Phenol im Volumenverhältnis analog DIN 53 728 1 : 1 bestimmt.

Beispiel 1

11,52 g (0,07 Mol) Isophthalsäure, 30,00 g (0,07 Mol) 4,4'-Bis(4-aminophenoxydiphenylsulfon und 0,22 g Triphenylphoshit werden bei 220 °C aufgeschmolzen. Nach 60 Minuten wird die Temperatur auf 250 °C erhöht. Im Verlauf von 60 Minuten bei 250 °C nimmt die Viskosität der Schmelze stark zu. Anschließend wird die Temperatur für weitere 30 Minuten auf 350 °C erhöht. Man erhält ein Polyamid mit folgenden Eigenschaften: J = 120 $cm^3$/g und $T_g$ = 245 °C. Bei 300 °C läßt sich das Produkt zu transparenten Platten verpressen.

Beispiel 2

11,52 g (0,07 Mol) Isophthalsäure und 30,00 g (0,07 Mol) Bis-4,4'-(4-Aminophenoxy)-diphenylsulfon werden mit 112,8 mg (1,37 m Mol) phosphoriger Säure und 88,7 mg (0,69 m Mol) Isochinolin unter Stickstoff 20 Minuten bei 250 °C und anschließend 20 Minuten bei 350 °C gerührt. Das im Verlauf der Reaktion abgespaltene Reaktionswasser wird dabei abdestilliert. Man erhält ein Polyamid mit J = 63 $cm^3$/g.

Beispiel 3

1 800 g (4,16 Mol) 4,4'-Bis(4-aminophenoxy)diphenylsulfon, 694 g (4,18 Mol) Isophthalsäure, 26,20 g (0,08 Mol) Triphenylphosphit und 18,00 g (0,18 Mol) Calciumcarbonat werden bei 250 °C unter Stickstoff aufgeschmolzen und anschließend unter Rühren 45 Minuten bei 290 °C kondensiert. Das bei der Kondensation abgespaltene Wasser wird mit dem Inertgas augekreist. Das blaßgelbe, transparente Oligomere weist einen J-Wert von 14 $cm^3$/g in einer Mischung aus je 50 Teilen Phenol und 1,2-Dichlorbenzol auf. Die Nachkondensation wird im Doppelschneckenextruder bei einer Kondensationstemperatur von 320 °C und einer Werkzeugtemperatur von 345 °C unter Anlegen eines Vakuums (120 mbar) durchgeführt und führt zu einer Viskositätszahl J = 55 $cm^3$/g.

Beispiel 4

48,00 g (0,11 Mol) 4,4'-Bis(4-aminophenoxy)diphenylsulfon, 3,00 g m-Phenylendiamin, 23,04 g (0,14 Mol) Isophthalsäure, 0,60 ml 50 %ige wäßrige hypophosphorige Säure und 0,672 g 4-Dimethylaminopyridin werden unter Stickstoff 30 Minuten bei 250 °C gerührt. Im Verlauf von 20 Minuten wird die Temperatur auf 350 °C erhöht; anschließend läßt man erkalten. Das goldbraune, transparente Copolymamid zeigt einen J-Wert von 33 $cm^3$/g.

Beispiel 5

30,00 g (0,07 Mol) 4,4'-Bis(4-aminophenoxy)diphenylsulfon, 2,30 g (0,014 Mol) Terephthalsäure, 9,22 g (0,056 Mol) Isophthalsäure, 0,44 g (0,0014 Mol) Triphenylphosphit und 0,30 g (0,003 Mol) Calciumcarbonat werden 20 Minuten bei 250 °C gerührt, anschließend wird die Temperatur im Verlauf von 10 Minuten auf 300 °C erhöht. Man erhält ein farbloses, transparentes Produkt mit dem J-Wert 37 $cm^3/g$.

Beispiel 6

900 g (2,08 Mol) 4,4'-Bis(4-aminophenoxy)diphenylsulfon, 347 g (2,09 Mol) Isophthalsäure, 7,63 g (0,06 Mol) 4-Dimethylaminopyridin und 3,41 g (0,04 Mol) phosphorige Säure werden gemeinsam aufgeschmolzen und 25 Minuten bei 290 °C gerührt. Man erhält ein Oligomeres mit dem J-Wert 13 $cm^3/g$. Die Nachkondensation im Doppelschneckenextruder bei 320 °C im Vakuum liefert ein Polyamid mit dem J-Wert 55 $cm^3/g$.

Beispiel 7

60,00 g (0,14 Mol) 4,4'-Bis(4-aminophenoxy)diphenylsulfon, 23,04 g (0,14 Mol) Isophthalsäure, 504 mg 4-Dimethylaminopyridin und 225,6 mg phosphorige Säure werden im Haake-Rheomix-Laborkneter bei 220 bis 290 °C unter Entfernung des bei der Kondensation austretenden Wassers geknetet. Nach 20 Minuten erhält man ein Polyamid mit dem J-Wert 21 $cm^3/g$.

Beispiel 8

60,0 g (0,14 Mol) 4,4'-Bis(4-aminophenoxy)diphenylsulfon, 11,52 g (0,07 Mol) Terephthalsäure, 11,52 g (0,07 Mol) Isophthalsäure, 225,6 mg phosphorige Säure und 504 mg 4-Dimethylaminopyridin werden 20 Minuten bei 250 °C und 25 Minuten bei 250 bis 370 °C polykondensiert. Das erhaltene Polyamid mit J-Wert 33 $cm^3/g$ wird bei 335 °C im Laborkneter nachkondensiert. Nach 4 Minuten zeigt die Schmelze ein Drehmoment von 9,4 Nm an.

**Patentansprüche**

1. Verfahren zur Herstellung von hochmolekularen aromatischen Polyamiden durch Kondensation von aromatischen Diaminen und aromatischen Dicarbonsäuren in Gegenwart eines P-haltigen Katalysators,
dadurch gekennzeichnet,
daß man
(1). als aromatische Diamine Verbindungen der Formel

$H_2N - Ar' - X - Ar'' - Y - Ar'' - X - Ar' - NH_2$

mit Ar', Ar'' = m- oder p-Phenylenrest
X = -O- und Y = $-SO_2-$ oder
X = $-SO_2-$ und Y = -O-

einsetzt, die bis zu 70 Mol-% durch aromatische Diamine der Formel

$H_2N - Ar ((Z)_q - Ar)_r - NH_2$

ersetzt sein können,
mit Ar = m-Phenylen, p-Phenylen
Z = gleiche oder verschiedene Reste aus der Gruppe -O-, -S-, $-SO_2-$, -CO-,
q = 0 oder 1
r = 0, 1 oder 2
(2). als aromatische Dicarbonsäuren
a) C(1-6)-Alkyl
b) gegebenenfalls alkyl- oder arylsubsituierter Phenylrest
c) Alkoxyrest mit 1 - 6 C-Atomen
d) Phenoxyreste, wobei der Phenylring wiederum alkyl- oder arylsubstituiert sein kann
e) Halogen, insbesondere Chlor und Brom,
b) eine Säure der Formel

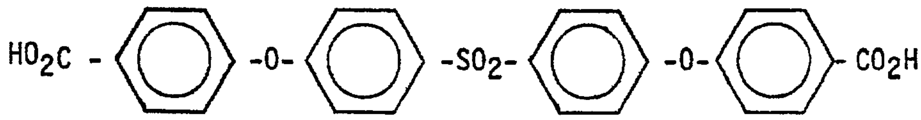

c) eine Dicarbonsäure der allgemeinen Formel

$HO_2C - Ar - (A - Ar)_p - CO_2H$

mit Ar = m-Phenylen oder p-Phenylen
A = -O-, -S-, $-SO_2-$, -CO-, und
p = 0 oder 1
einsetzt,
(3). als Katalysator katalytische Mengen von Triphenylphosphit oder einer vom Phosphor abgeleiteten Säure der Formel $H_3PO_n$ mit
n = 2, 3, 4
verwendet und
(4). die Kondensation in der Schmelze der Ausgangsstoffe durchführt.

2. Verfahren nach Anspruch 1,
dadurch gekennzeichnet,
daß man als aromatische Dicarbonsäure Isophthalsäure verwendet.

3. Verfahren nach den Ansprüchen 1 und 2,
dadurch gekennzeichnet,
daß man als aromatisches Diamin 4,4'-Bis(4-aminphenoxy)diphenylsulfon einsetzt.

4. Verfahren nach den Ansprüchen 1 bis 3,
dadurch gekennzeichnet,
daß man neben dem P-haltigen Katalysator als Cokatalysator ein 4-Dialkylaminopyridin, eine hochsiedene organische Base mit tertiärem Stickstoffatom oder ein anorganisches, basisches Salz einsetzt.

5. Verfahren nach den Ansprüchen 1 bis 4,
dadurch gekennzeichnet,
daß man die Schmelzkondensation bei einer Temperatur von 200 bis 380 °C, vorzugsweise 250 bis 350 °C, durchführt.

6. Verfahren nach den Ansprüchen 1 bis 5,
dadurch gekennzeichnet,
daß man die Schmelzkondensation in zwei Stufen durchführt, wobei die Temperatur in der ersten Stufe im Bereich bis 250 °C und die Temperatur in der zweiten Stufe über 300 °C gehalten wird.

7. Verfahren nach den Ansprüchen 1 bis 6,
dadurch gekennzeichnet,
daß man die zweite Stufe der Schmelzkondensation in einem Kneter oder Extruder durchführt.

**Revendications**

1. Procédé pour la préparation de polyamides aromatiques de poids moléculaire élevé, par condensation de diamines aromatiques et d'acides dicarboxyliques aromatiques en présence d'un catalyseur renfermant du phosphore, caractérisé par le fait que l'on utilise
(1) comme diamines aromatiques des composés de formule

$H_2N–Ar'–X–Ar''–Y–Ar''–X–Ar'–NH_2$

où Ar' et Ar'' représentent un reste méta-phénylène ou para-phénylène,
X représente –O– et Y $–SO_2–$, ou
X représente $–SO_2–$ et Y représente –O–,

qui peuvent être remplacés jusqu'à 70 moles-% par des diamines aromatiques de formule

$H_2N–Ar((Z)_q–Ar)_r–NH_2$,

dans laquelle Ar représente un reste méta-phénylène, para-phénylène,
Z représente des radicaux identiques ou différents du groupe –O–, –S–, $–SO_2–$, –CO–,
$\underline{q}$ est égal à zéro ou à l'unité, et $\underline{r}$ est égal à zéro, à l'unité ou à 2.
(2) comme acides dicarboxyliques aromatiques
A) l'acide isophtalique qui peut éventuellement être remplacé jusqu'à 60 moles-% par de l'acide téréphtalique, les deux acides pouvant être mono- ou poly-substitués par les radicaux suivants:

a) un alkyle en $C_1$ à $C_6$,
b) un reste phényle éventuellement substitué par un groupe alkyle ou aryle,
c) un radical alcoxy comportant de 1 à 6 atomes de carbone
d) des radicaux phénoxy, le noyau phényle pouvant à nouveau être substitué par un radical alkyle ou aryle,
e) un halogène, en particulier du chlore et du brome,
B) un acide de formule

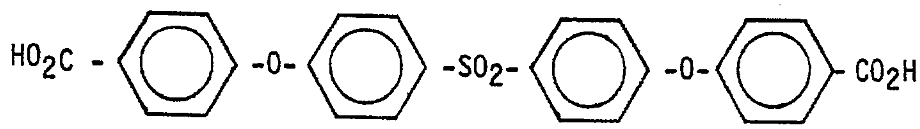

C) un acide dicarboxylique de la formule générale

$HO_2C-Ar-(A-Ar)_p-CO_2H$

dans laquelle Ar représente un radical méta-phénylène ou para-phénylène,
A représente –O–, –S–, $-SO_2-$, –CO–, et
p est égal à zéro ou à l'unité,
(3) comme catalyseur, des quantités catalytiques de phosphite de triphényle ou d'un acide dérivant du phosphore et répondant à la formule
$H_3PO_n$,
dans laquelle n est égal à 2, 3 ou 4
(4) que l'on effectue la condensation dans la masse fondue des substances de départ.

2. Procédé selon la revendication 1, caractérisé par le fait que l'on utilise, comme acide dicarboxylique aromatique, l'acide isophtalique.

3. Procédé selon les revendications 1 et 2, caractérisé par le fait que l'on utilise, comme diamine aromatique, la 4,4'–bis–(4-amino-phénoxy)-diphényl-sulfone.

4. Procédé selon les revendications 1 à 3, caractérisé par le fait qu'à côté du catalyseur renfermant du phosphore, on utilise, comme co-catalyseur, une 4-dialkyl-amino-pyridine, une base organique à point d'ébullition élevé qui comporte un atome d'azote tertiaire, ou un sel minéral basique.

5. Procédé selon les revendications 1 à 4, caractérisé par le fait que l'on effectue la condensation à l'état fondu à une température de 200 à 380°C, de préférence de 250 à 350°C.

6. Procédé selon les revendications 1 à 5, caractérisé par le fait que l'on effectue en deux stades la condensation à l'état fondu, la température étant maintenue, dans le premier stade, dans un domaine allant jusqu'à 250°C, et la température étant maintenue, dans le deuxième stade, au dessus de 300°C.

7. Procédé selon les revendications 1 à 6, caractérisé par le fait que l'on effectue le second stade de la condensation à l'état fondu, dans un pétrin ou dans un extrudeuse.

**Claims**

1. A process for the preparation of a high molecular weight aromatic polyamide by condensation of an aromatic diamine and an aromatic dicarboxylic acid in the presence of a P-containing catalyst, characterized in that
(1) the aromatic diamine used is a compound of the formula

$H_2N-Ar'-X-Ar''-Y-Ar''-X-Ar'-NH_2$

where Ar' and Ar" = an m- or p-phenylene radical
X = –O– and Y = $-SO_2-$ or
X = $-SO_2-$ and Y = –O–,
of which up to 70 mol% may be replaced by an aromatic diamine of the formula

$H_2N-Ar((Z)_q-Ar)_r-NH_2$

where Ar = m-phenylene or p-phenylene
Z = identical or different radicals from the group comprising –O–, –S–, $-SO_2-$ and –CO–
q = 0 or 1 and
r = 0, 1 or 2
(2) the aromatic dicarboxylic acid employed is
A) isophthalic acid, of which up to 60 mole percent may be replaced by terephthalic acid, and where the two acids may be monosubstituted or polysubstituted by the following radicals

a) C(1–6)alkyl
b) a phenyl radical which is optionally substituted by alkyl or aryl
c) an alkoxy radical having 1–6 C atoms
d) phenoxy radicals in which the phenyl ring may in turn be substituted by alkyl or aryl
e) halogen, in particular chlorine and bromine,

B) an acid of the formula

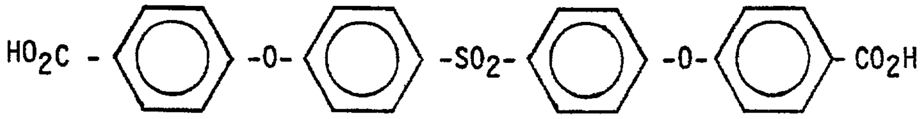

C) a dicarboxylic acid of the general formula

$HO_2C–Ar–A(A–Ar)_p–CO_2H$

where Ar = m-phenylene or p-phenylene
A = –O–, –S–, $–SO_2–$ or –CO–, and
p = 0 or 1,

(3) the catalyst used is a catalytic amount of triphenyl phosphite or an acid derived from phosphorus, of the formula $H_3PO_n$ where n = 2, 3 or 4, and

(4) the condensation is carried out in the melt of the starting materials.

2. A process according to Claim 1, characterized in that the aromatic dicarboxylic acid used is isophthalic acid.

3. A process according to either Claim 1 or 2, characterized in that the aromatic diamine employed is 4,4'-bis(4-aminophenoxy)diphenyl sulfone.

4. A process according to any of Claims 1 to 3, characterized in that, besides the P-containing catalyst, a 4-dialkylaminopyridine, a high-boiling organic base containing a tertiary nitrogen atom or an inorganic, basic salt is employed as cocatalyst.

5. A process according to any of Claims 1 to 4, characterized in that the melt condensation is carried out at a temperature of from 200 to 380°C, preferably 250 to 350°C.

6. A process according to any of Claims 1 to 5, characterized in that the melt condensation is carried out in two steps, the temperature in the first step being kept in the range up to 250°C and the temperature in the second step being kept above 300°C.

7. A process according to any of Claims 1 to 6, characterized in that the second step of the melt condensation is carried out in a kneader or extruder.